Europäisches Patentamt

European Patent Office

Office européen des brevets

(19)

(11) Veröffentlichungsnummer : **0 186 029**
**B1**

(12) **EUROPÄISCHE PATENTSCHRIFT**

(45) Veröffentlichungstag der Patentschrift :
07.09.88

(21) Anmeldenummer : 85115647.1

(22) Anmeldetag : 09.12.85

(51) Int. Cl.⁴ : **B 01 D 17/05**

(54) Verfahren zum Trennen von Öl-in-Wasser-Emulsionen.

(30) Priorität : 20.12.84 DE 3446489

(43) Veröffentlichungstag der Anmeldung :
02.07.86 Patentblatt 86/27

(45) Bekanntmachung des Hinweises auf die Patenterteilung : 07.09.88 Patentblatt 88/36

(84) Benannte Vertragsstaaten :
AT DE FR GB IT

(56) Entgegenhaltungen :
WO-A-84 /011 45
US-A- 3 461 163
US-A- 4 120 815

(73) Patentinhaber : HOECHST AKTIENGESELLSCHAFT
Postfach 80 03 20
D-6230 Frankfurt am Main 80 (DE)

(72) Erfinder : Hofinger, Manfred, Dr.
Hoher-Göll-Weg 7
D-8269 Burgkirchen (DE)
Erfinder : Hille, Martin, Dr.
In den Eichen 46
D-6237 Liederbach (DE)
Erfinder : Böhm, Roland
Fischbacher Strasse 29
D-6233 Kelkheim (Taunus) (DE)

## Beschreibung

Die Erfindung betrifft ein Verfahren zum Trennen von Öl-in-Wasser-Emulsionen durch Zugabe von kationischen Polymeren.

Das Problem einer Trennung von Öl-in-Wasser-Emulsionen tritt auf insbesondere bei der Förderung und Aufbereitung des Rohöls wie auch bei dessen Weiterverarbeitung in der Raffinerie.

Rohöle bilden mit dem in Lagerstätten vorhandenen Wasser, je nach der chemischen Zusammensetzung, mehr oder weniger leicht Wasser-in-Öl-Emulsionen. Für deren Trennung sind eine große Zahl von Verfahren und von dafür wirksamen Substanzen dem Fachmann bekannt. Bei diesem Trennungsprozeß bildet sich eine separierte wäßrige Phase, die — je nach Rohöltyp — noch beträchtliche Mengen an Öl enthalten kann. Dieses muß in einem besonderen Prozeß, der sogenannten Invertspaltung, zurückgewonnen werden, wofür spezielle Demulgatoren (sogenannte Invertspalter) erforderlich sind, die sich von denjenigen, die für die Trennung von Wasser-in-Öl-Emulsionen verwendet werden, unterscheiden. Zur Trennung von Öl-in-Wasser-Emulsionen setzt man Polymere ein, wobei ionische besser separieren und hier wiederum kationische effektiver als anionische sind.

Als kationische Polymere für diesen Zweck sind beschrieben worden Copolymere von Acrylamid und diallylamin in der US-A 3 316 181 und Copolymere aus Acrylamid und Diallyldialkylammoniumchlorid in der US-A 3 585 148. Gemäß der US-A 4 120 815 soll ein Gemisch aus einem kationischen Terpolymeren von Acrylamid/Diallyldimethylammoniumchlorid/Diallyldiethylammoniumchlorid und einem amphoteren Quaterpolymeren von Acrylamid/Acrylsäure/Diallyldimethylammoniumchlorid/Diallyldiethylammoniumchlorid im Gewichtsverhältnis 50 : 50 eine Verbesserung bringen. Es ist jedoch ersichtlich, daß die Herstellung eines solchen Gemisches sehr kompliziert ist. In der genannten US-A 4 120 815 werden auch zum Vergleich nicht hydrolysierte Homopolymere des Dimethyldiallylammoniumchlorids für diesen Zweck genannt, die jedoch nicht ausreichende Ergebnisse bei der Trennung liefern (vgl. Vergleichsversuche D in den Beispielen I bis V) und daher als nicht geeignet zum Trennen solcher Emulsionen angesehen werden.

Die Verbesserung solcher Trennverfahren, insbesondere im Hinblick auf die Gewinnung des Erdöls, ist jedoch eine fortdauernde Aufgabe, da steigende Rohstoffpreise eine immer weitgehendere Gewinnung und Isolierung von Restmengen an Rohöl erfordern.

Überraschenderweise wurde nun gefunden, daß eine erhebliche Verbesserung erzielt werden kann, wenn man in einem Verfahren der eingangs genannten Art der Emulsion ein Homopolymeres des Diallyldimethylammoniumchlorids zusetzt, das noch 5 bis 10 Gew.-% Monomeres enthält und eine Viskosität von 15 000 bis 45 000 mPa s, gemessen in einer 38 gew.-%igen Lösung in Wasser bei 25 °C, besitzt.

Das erfindungsgemäße Verfahren beruht auf der überraschenden Beobachtung, daß Homopolymere von Diallyldimethylammoniumchlorid (DADMAC) dann speziell zur Demulgierung von Öl-in-Wasser-Emulsionen geeignet sind, wenn sie durch eine Homopolymerisation von DADMAC gewonnen werden, bei der der Umsetzungsgrad mindestens 90 % und höchstens 95 % beträgt, das heißt, bezogen auf die Gewichtssumme Monomeres plus Polymeres, noch 5 bis 10 Gew.-% Restmonomeres anwesend ist, und wenn die Viskosität des gewonnenen Homopolymeren, gemessen an einer 38 gew.-%igen Lösung in Wasser bei 25 °C, 15 000 bis 45 000, vorzugsweise 20 000 bis 30 000 mPa s beträgt. Vorzugsweise ist das erfindungsgemäß eingesetzte Poly-DADMAC hergestellt durch eine Homopolymerisation, die bis zu einem Umsetzungsgrad von mindestens 91 % bis höchstens 93 % geführt worden ist, das heißt, es sind noch, bezogen auf die Gewichtssumme Monomeres plus Polymeres, 7 bis 9 Gew.-% Restmonomeres anwesend.

DADMAC ist eine seit langem bekannte Verbindung und wird üblicherweise aus Dimethylamin und Allylchlorid hergestellt (vgl. z. B. US-A-2 923 701 und Us-A-3 461 163). Gleichfalls bekannt ist die Homopolymerisation von DADMAC in wäßriger Phase, beispielsweise aus der US-A-3 288 770. Eine solche Polymerisation wird auch hier angewendet, wobei wasserlösliche, radikalbildende Initiatoren wie Ammonium- oder Alkaliperoxodisulfat oder 2,2'-Azo-bis-(2-amidinpropan)-dihydrochlorid zugegen sind. Um Schwermetallspuren, die die Polymerisation behindern, auszuschalten, werden Komplexbildner wie Ethylendiamintetraessigsäure-Na-Salz zugegeben. Bei Verwendung von Peroxodisulfaten können auch Puffersubstanzen wie Kaliumhydrogencarbonat zugegeben werden. Um das im erfindungsgemäßen Verfahren eingesetzte Poly-DADMAC mit dem obengenannten Restmonomeren-Gehalt und der oben definierten Viskosität zu erhalten, wird eine Startkonzentration des Monomeren von 60 bis 65 Gew.-% in Wasser eingehalten, eine Polymerisationstemperatur von 80 bis 85 °C eingestellt und der Initiator in einer Menge von $5 \cdot 10^{-3}$ bis $1 \cdot 10^{-2}$ mol pro 1 mol Monomeres eingesetzt. Die Reaktion wird fortlaufend mittels HPLC (= high performance liquid chromatography) messend verfolgt. Sie wird im Bereich von 90 bis 95, vorzugsweise 91 bis 93 % Umsatz durch Abkühlen oder durch Zugabe von Inhibitoren wie Hydrochinon, Benzochinon und dergleichen gestoppt oder durch eine entsprechende Nachreaktionszeit bis auf diesen Umsetzungsgrad gebracht.

Das auf diese Weise gewonnene Poly-DADMAC ist eine viskose, klare Flüssigkeit, die einen pH-Wert von 6 bis 7 aufweist. Sie ist als solche unverdünnt gemäß dem erfindungsgemäßen Verfahren einsetzbar, da sie mit Wasser in allen Verhältnissen unbegrenzt mischbar ist. Die Einsatzkonzentration kann je nach

# 0 186 029

Art der zu trennenden Öl-in-Wasser-Emulsionen und den angetroffenen Temperaturen schwanken. Häufig liegt diese Konzentration im Bereich von 1 bis 5 000, vorzugsweise 3 bis 500 ppm Wirkstoff, bezogen auf die zu spaltende Emulsion.

Aus Gründen der besseren Dosierbarkeit kann jedoch eine verdünntere wäßrige Einstellung bevorzugt sein.

Das erfindungsgemäße Verfahren ist vor allem anwendbar auf den Prozeß der sogenannten Invertspaltung bei der Primärförderung des Erdöls, bei dem eine Öl-in-Wasser-Emulsion anfällt, die als wäßrige Phase bei der vorhergehenden Trennung der bei der Förderung erhaltenen Wasser-in-Öl-Emulsionen erhalten wird. Ferner ergeben sich Öl-in-Wasser-Emulsionen in großen Mengen bei der Sekundär- und Tertiärförderung des Erdöls bei zunehmender Erschöpfung der Rohöllagerstätten. Schließlich werden auch in Raffinerien häufig nochmals Wasserwäschen von Rohölen vorgenommen, und die dabei entstehenden Öl-in-Wasser-Emulsionen müssen gleichfalls aufgearbeitet werden.

Die Erfindung wird durch folgende Beispiele erläutert :

Herstellung der erfindungsgemäß eingesetzten Poly-DADMAC-Proben

### Beispiel 1

555 g einer 60 %igen Lösung von Diallyldimethylammoniumchlorid in Wasser werden mit einer wäßrigen Lösung von 2,3 g Kaliumhydrogencarbonat und 130 mg Ethylendiamintetraessigsäure-Na-Salz versetzt. Nach intensiver Entgasung und Stickstoffspülung werden bei einer Temperatur von 82 °C 2,4 g Ammoniumperoxodisulfat, gelöst in 34 g Wasser, während einer Zeitspanne von 100 min kontinuierlich zugegeben. Nach einer Nachreaktionszeit von 2 h bei 80 °C ist die Polymerisation beendet. Das Produkt weist gemäß HPLC einen Restmonomer-Gehalt von 5 Gew.-% und ferner eine Viskosität von 32 000 mPa s bei 25 °C auf. Es wird für die Viskositätsmessung mit Wasser auf einen Gehalt von 38 Gew.-% eingestellt.

### Beispiel 2

Es wird vefahren nach der Vorschrift von Beispiel 1, jedoch werden jetzt 2,4 g Ammoniumperoxodisulfat in 90 g Wasser gelöst in einem Zeitraum von 100 min zugegeben. Die Nachreaktionszeit beträgt 1,5 h.

### Beispiel 3

Es wird verfahren nach der Vorschrift von Beispiel 2, jedoch mit einer Nachreaktionszeit von 2 h.

### Vergleichsbeispiele 1a bis 3a

Die Poly-DADMAC-Vergleichsproben werden nach der Vorschrift von beispiel 1 erhalten, jedoch wird eine höhere Initiatormenge ($1 \cdot 10^{-2}$ bis $5 \cdot 10^{-2}$ mol, bezogen auf 1 mol Monomeres) angewendet und gegebenenfalls wird die Laufzeit verlängert, bis der Umsetzungsgrad 100 % beträgt.

Die in den unten angegebenen Trennprozessen eingesetzten DADMAC-Homopolymeren haben folgende Kenngrößen :

| Beispiel/ Vergleichs- beispiel | Polymerisations- umsatz (%) | Restmonomeren- Gehalt (%) | Viskosität (mPa s) * |
|---|---|---|---|
| 1 | 95,0 | 5,0 | 32 000 |
| 2 | 90,0 | 10,0 | 16 000 |
| 3 | 91,8 | 8,2 | 24 500 |
| 1a | prakt. 100 | prakt. 0 | 32 000 |
| 2a | prakt. 100 | prakt. 0 | 46 000 |
| 3a | prakt. 100 | prakt. 0 | 44 000 |

*) gemessen an einer 38 gew.-%igen Lösung bei 25 °C mit einem Rheomat 30 der Firma Contraves.

Die folgenden Tabellen zeigen die überlegene Wirkung der gemäß dem erfindungsgemäßen Verfahren eingesetzten DADMAC-Homopolymeren.

Trennung von Öl-in-Wasser-Emulsion aus einem Ölfeld

Herkunft: Norddeutschland          Ölgehalt: 1250 ppm

| Konzentration ppm | | 0 | 10 | 20 | 30 | 40 |
|---|---|---|---|---|---|---|
| Produkt nach Beispiel | Konzentration | Öl | im | Wasser | in | ppm |
| 1 | 1250 | 220 | 80 | 33 | 18 | |
| 2 | 1250 | 180 | 55 | 21 | 12 | |
| 3 | 1250 | 200 | 40 | 20 | 12 | |
| ------ | | | | | | |
| 1a | 1250 | 1100 | 600 | 550 | 500 | |
| 2a | 1250 | 1200 | 900 | 750 | 980 | |
| 3a | 1250 | 1200 | 1100 | 630 | 280 | |

Die Ölbestimmung erfolgte hier und in den folgenden Beispielen mit dem Öl-in-Wasser-Meßgerät der Firma Horiba. Die Invertspalter wurden als 30 gew.-%ige Lösung dosiert und die Proben zur Ölbestimmung nach 3 h Aufrahmzeit entnommen.

Trennung von Ölfeldabwasser

Herkunft:  Borneo

| Konzentration ppm | | 0 | 2 | 4 | 10 | 20 |
|---|---|---|---|---|---|---|
| Produkt nach Beispiel | Konzentration | Öl | im | Wasser | in | ppm |
| 1 | 355 | 160 | 48 | 15 | 11 | |
| 2 | 355 | 124 | 36 | 14 | 10 | |
| 3 | 355 | 140 | 40 | 14 | 11 | |
| -------- | | | | | | |
| 1a | 355 | 320 | 168 | 82 | 65 | |
| 2a | 355 | 335 | 211 | 128 | 95 | |
| 3a | 355 | 330 | 195 | 111 | 88 | |

Die Invertspalter wurden als 30 gew.-%ige Lösung dosiert und die Proben zur Ölbestimmung nach 1 Stunde entnommen.

Trennung von Raffinerieabwasser

Herkunft: BR-Deutschland          Ölgehalt 115 ppm

| Konzentration ppm | | 0 | 1 | 2 | 3 |
|---|---|---|---|---|---|
| Produkt nach Beispiel | Konzentration | Öl | im | Wasser | in ppm |
| 1 | 115 | 28 | 12 | 5 | |
| 2 | 115 | 33 | 14 | 6 | |
| 3 | 115 | 26 | 10 | 4 | |
| -------- | | | | | |
| 1a | 115 | 105 | 86 | 73 | |
| 2a | 115 | 110 | 103 | 95 | |
| 3a | 115 | 100 | 82 | 70 | |

Die Invertspalter wurden als 30 gew.-%ige Lösung dosiert und die Proben zur Ölbestimmung nach 30 min entnommen.

Ölfeldabwasser einer dampfgefluteten Lagerstätte

Herkunft:  Venezuela

Konzentration ppm    0         100      200      300

| Produkt nach Beispiel | Konzentration | Öl | im Wasser in ppm | |
|---|---|---|---|---|
| 1 | 12 000 | 428 | 66 | 35 |
| 2 | 12 000 | 396 | 73 | 38 |
| 3 | 12 000 | 445 | 54 | 28 |
| 1a | 12 000 | 5 850 | 3 240 | 490 |
| 2a | 12 000 | 6 130 | 3 627 | 560 |
| 3a | 12 000 | 7 280 | 3 885 | 490 |

Die Invertspalter wurden in 10 %iger Verdünnung mit Wasser dosiert und die Proben zur Ölbestimmung nach 4 Stunden entnommen.

## Patentansprüche

1. Verfahren zum Trennen von Öl-in-Wasser-Emulsionen durch Zugabe von kationischen Polymeren, dadurch gekennzeichnet, daß der Emulsion ein Homopolymeres des Diallyldimethylammoniumchlorids zugesetzt wird, das noch 5 bis 10 Gew.-% Monomeres enthält und eine Viskosität von 15 000 bis 45 000 mPa s, gemessen in einer 38 gew.-%igen Lösung in Wasser bei 25 °C besitzt.

2. Verfahren nach Anspruch 1, dadurch gekennzeichnet, daß der Emulsion ein Homopolymeres des Diallyldimethylammoniumchlorids zugesetzt wird, das noch 7 bis 9 Gew.-% Monomeres enthält.

3. Verfahren nach Anspruch 1 oder 2, dadurch gekennzeichnet, daß der Emulsion ein Homopolymeres zugesetzt wird, das eine Viskosität von 20 000 bis 30 000 mPa s, gemessen in einer 38 gew.-%igen Lösung in Wasser bei 25 °C besitzt.

## Claims

1. Method for the separation of oil-in-water emulsions by addition of cationic polymers, characterised in that a homopolymer of diallyldimethylammonium chloride which contains in addition 5 to 10 % by weight of monomer and has a viscosity of 15,000 to 45,000 mPa s, measured in a 38 % by weight solution in water at 25 °C, is added to the emulsion.

2. A method as claimed in claim 1, wherein a homopolymer of diallyldimethylammonium chloride which contains in addition 7 to 9 % by weight of monomer is added to the emulsion.

3. A method as claimed in claim 1, wherein a homopolymer of diallyldimethylammonium chloride which has a viscosity of 20,000 to 30,000 mPa s, measured in a 38 % by weight solution in water at 25 °C, is added to the emulsion.

## Revendications

1. Procédé pour séparer des émulsions LH (« huile-dans-l'eau ») par addition de polymères cationiques, procédé caractérisé en ce qu'on ajoute à l'émulsion un homopolymère du chlorure de diallyl-dialkyl-ammonium qui contient encore de 5 à 10 % en poids du monomère et qui a une viscosité, mesurée à 25 °C sur une solution aqueuse à 38 % en poids, comprise entre 15 000 et 45 000 mPa · s.

2. Procédé selon la revendication 1, caractérisé en ce qu'on ajoute à l'émulsion un homopolymère du chlorure de diallyl-diméthyl-ammonium qui contient encore de 7 à 9 % en poids du monomère.

3. Procédé selon l'une des revendications 1 et 2, caractérisé en ce qu'on ajoute à l'émulsion un homopolymère dont la viscosité, mesurée à 25 °C sur une solution aqueuse à 38 % en poids, est comprise entre 20 000 et 30 000 mPa · s.